# EUROPEAN PATENT SPECIFICATION

(11) **EP 1 919 806 B1**
(45) Date of publication and mention of the grant of the patent: **11.01.2012**
(21) Application number: 06761840.5
(22) Date of filing: 01.08.2006
(51) Int. Cl.: B65G 69/28

(54) **RAMP WITH SIDE REINFORCEMENTS**
RAMPE MIT SEITENVERSTÄRKUNGEN
RAMPE AVEC RENFORTS LATÉRAUX

(30) Priority: 02.08.2005 DK 200501108
(43) Date of publication of application: 14.05.2008
(73) Proprietor: PF MANAGEMENT Holding ApS, 7480 Vildbjerg (DK)
(72) Inventor: HABEKOST, Michael, DK-7490 Aulum (DK); KROGSTRUP,Børge, DK-7480 Vildbjerg (DK)
(74) Representative: Nielsen, Leif
(86) International application number: PCT/DK2006/000429
(87) International publication number: WO 2007/014565

(56) References cited:
- DE-U1- 8 702 994
- GB-A- 928 881
- US-A- 2 689 965
- US-A- 3 802 018
- US-A- 3 820 806
- US-A1- 2003 145 398
- US-A1- 2003 213 072

## Description

### Field of the Invention

The present invention relates to ramps, for example a drive ramp for use in driving up or down the ramp for transporting a vehicle from a first level to a second level, wherein the ramp comprises a mid section with a surface and an end section provided in an extension of the surface with a contact face for resting on the higher level when the ramp is in use, where at in each side of the ramp there is provided a reinforcing side section which extends upwards or downwards with respect to the surface of the mid section and which extends upwards from the surface of the end section.

### Description of Prior Art

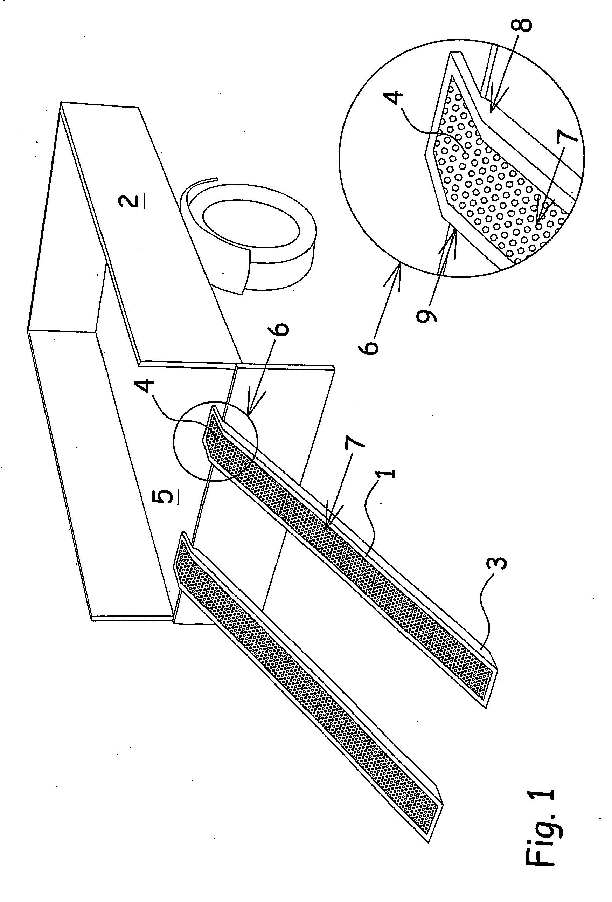

Fig. 1 shows the use a drive ramp in general. The ramp 1 rests its one end 3, which has bevelled cut, on the ground, while at the opposite, second end, there is provided an end section 4 resting on the platform 5 of a trailer 2. Typically the second end section 4 is provided as a part bent in an angle into a fold 9 with respect to the mid section 7 of the ramp 1.

In the enlarged section 6, it is illustrated that a stress zone 8 is located at the junction, the drive-up fold 9, between the second end section 4 of the ramp 1 and the mid section 7 of the ramp 1, which stress zone 8 implies a large risk of a fracture during loading of the ramp 1.

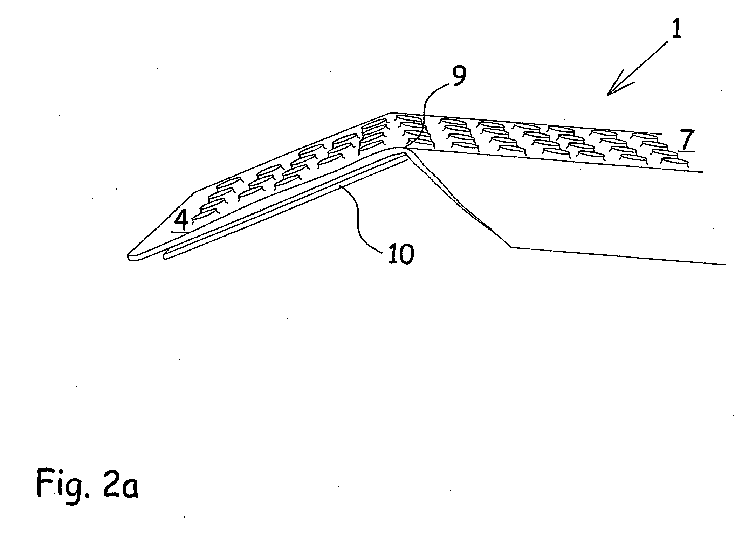

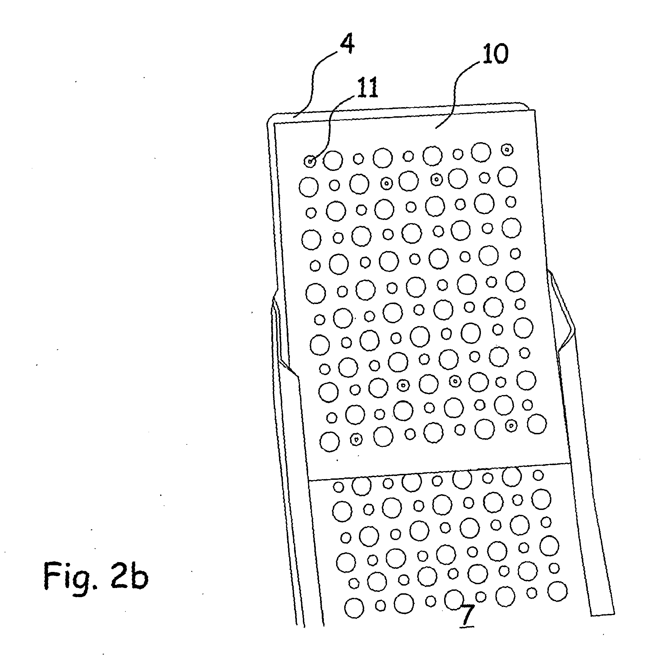

To neutralise the risk of a fracture of the fold 9 during loading, for example when a gardening tractor is driving onto the ramp 1 in order to arrive at the platform 5, the fold 9 has been reinforced by mounting a reinforcing material 10 below the fold 9 according to the prior art, as illustrated in Fig. 2. This reinforcing material 10 in form of a plate is to a great extend of the same nature as the upper face section 12 of the mid section 7 itself, and it is typically fixed to both the mid section 7 and to the second end 4 by rivets 11.

The disadvantage of a ramp according to prior art is a rather costly solution, and even in spite of the improvement of the reinforcement it is still not in accordance with expectations of most customers from a load point of view. In spite of the supporting reinforcement, the fold will still have the weakest cross section and for that reason a tendency to fracture, which diminishes the strength of the whole ramp.

A ramp of the type mentioned in the preamble is known from DE 8 427 129 U1. The ramp disclosed does not have a contact face for the ramp to a higher level, which can contribute to make the ramp strong from a load point of view.

Furthermore ramps are disclosed in GB 928881, US 2003213072 and DE8702994 which corresponds to the type mentioned in the preamble. None of these prior art ramps provide a reinforcing side section which connects the mid section and the end section and which extends downwards from the surface of the end section.

### Description of the Invention

Therefore it is the object of the invention to provide a ramp, which is stronger from a load point of view and which still is less costly to produce.

This object is fulfilled with a ramp, for example for use in driving up or down the ramp for transporting a vehicle from a first level to a second level, wherein the ramp comprises a mid section with a surface and an end section provided in an extension of the surface with a contact face for resting on the higher level when the ramp is in use, where at each side of the ramp there is provided a reinforcing side section which extends at an angle upwards or downwards from the surface of the mid section and which extends upwards from the surface of the end section according to claim 1. Moreover, in each side of the ramp said reinforcing side section connects the mid section and the end section and extends downwards from the surface of the end section. The reinforcing side section thus connects the mid section and the end section. The angle is preferably a right angle, whereby the highest stability is achieved, or an approximately right angle. Hereby, the reinforcing side sections, extending downwards from the end section, are bevelled in order to provide a lower contact face for the ramp to a higher level, for example when the ramp rests on the platform of a trailer. Moreover the reinforcing side section has a width which decreases in two steps from the mid section towards the end of the end section to form a contact angle.

To provide a contact angle, which prevents the ramp from sliding on the support layer of the higher level, for example the platform of a trailer, the reinforced side section have a width, which decreases in two steps from the mid section in the direction towards the end of the end section. Typically, such a contact angle would be positioned substantially under a bending between the mid section and the end section.

A ramp of this type has larger load stability than that of prior art ramps. Because the reinforcing side section does not require an area like the reinforcement of the prior art described in the preamble in connection with prior art, there is also a saving of material. Furthermore, such a reinforcing side section can be provided as a substantially right angled, bent section of the surface and as a substantially right angled, bent part of the end section. This is provided simply and fast by the method of producing the ramp according to the invention. Thereby, the whole production becomes much less costly than the production of ramps according to the prior art.

For example the end section can be provided as an end section which is bent in an angle to the mid section. A ramp according the invention can have a mid section with a straight surface and an end section which is straight. Alternately, the mid section and/or the end section can be curved.

The reinforced side section can advantageously have a width which decreases from the mid section in the direction towards the end of the end section. Since the torque under load is at its maximum exactly at the transition from the mid section and to the end section, for example in the fold, there is no need for the side section to have the same width over the whole length to the end of the side section. For example the width can decrease so with the distance from the mid section, for example linearly, that a straight lower contact face of the side section is provided where the contact face can rest on the flat support layer of the higher level. For this purpose it is further advantageous that the angle between the end section and the mid section is larger than the angle between the end section and this lower contact face.

Just as for prior art, the mid section can be reinforced in each side with other, for example L-formed, side sections. According to an embodiment of the invention the side section can extend in the extension of one of these other side sections towards the end of the end section.

Even though the ramp is intended for use in transport of vehicles from a first level to a second level, the ramp can likewise find others applications, for example transport of livestock to and from a truck, or transport of a barrow on the ramp. A use of the ramp is claimed in claim 10.

### Short description of the drawings

The invention is described in details with reference to the drawings where
Fig. 1 shows the use of a ramp,
Figs. 2a and 2b show a ramp according to the prior art,
Figs. 3a, 3b, 3c show a ramp according to the invention, and

### Detailed Description of the Invention

Fig. 1 shows the use of a ramp with a marked stress zone, and Fig. 2 shows a ramp according to the prior art as described in the preamble.

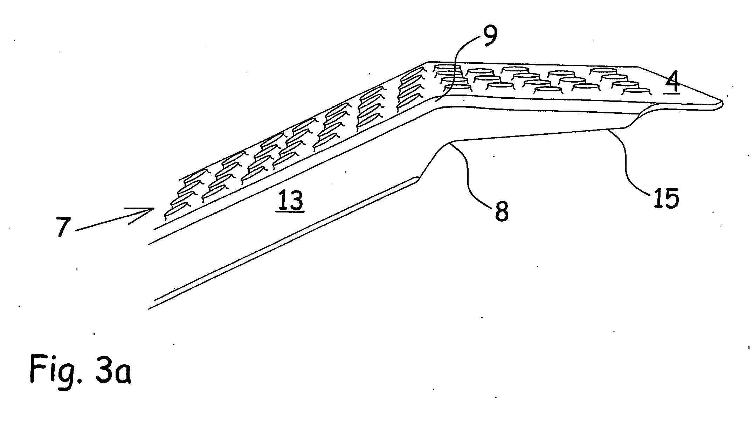

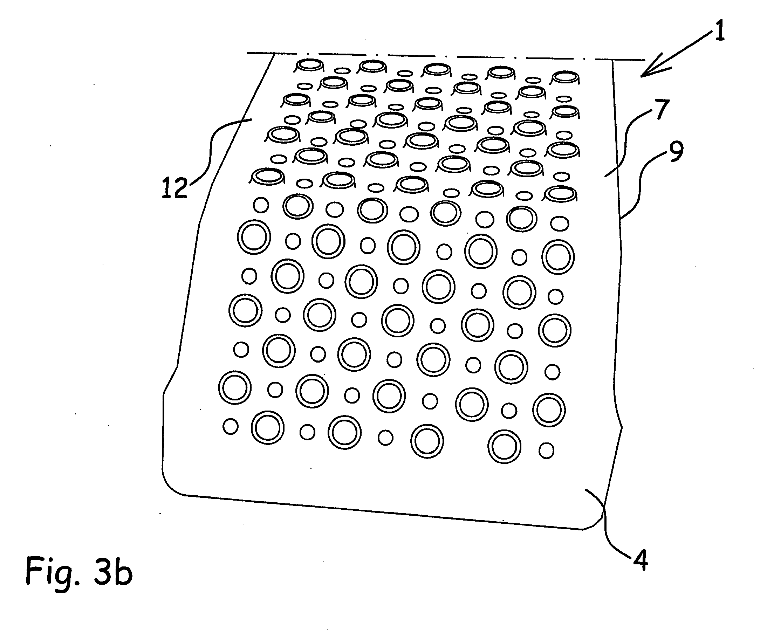

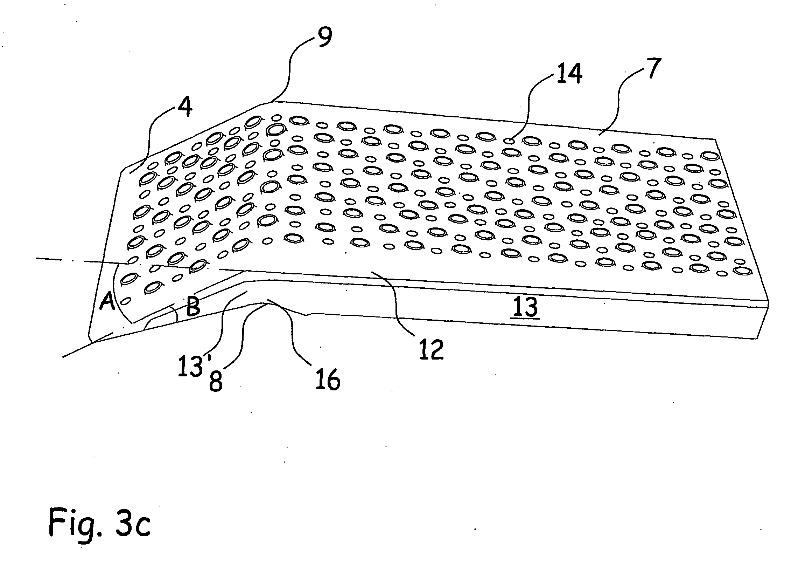

Fig. 3 shows a ramp 1 according to the invention. The ramp comprises a mid section 7, which is substantially C-formed with a downward facing opening, i.e. the mid section has a flat top side 12, which is bent in the sides 13 to provide reinforcing sides 13, which with respect to the top side extends substantially perpendicularly downwards from the top side 13. Furthermore, the sides 13 are bent inwards below the flat top side 12, so that the sides together with a part which extends perpendicularly away from the vertical part of the sides 13 are approximately L-formed. This is completely in analogy with prior art and can be seen clearly at the mid part 7 in Fig. 2a. The surface 12 of the ramp 1 is provided with holes 14 to prevent water from accumulating on the surface, to reduce the weight, and to provide a more slip secure surface. Also, the first end 3 of the ramp 1 is formed with a bevelled cut-off by analogy to prior art.

The difference between prior art and the invention lies in the transition between the mid section 7 and the end section 4, wherein the sides 13 extends themselves from the end section 4 also past the fold/corner 9 to the mid section 7 to thereby reinforce the fold 9 in the stress zone 8. In this way a very stable reinforcement is obtained, which at the same time is very easy to establish during production and even at low production costs.

The sides 13 are formed so that the lower edges of said sides run in parallel with the surface 12 in the mid section 7, whereas the sides 13' in the area around the fold 9 inclines to provide a lower contact face 15, when the ramp rests on the platform 5 of a trailer. For such a contact face the angle A between the surface 12 of the mid section 7 and the end section 4 is larger than the angle between the end section 4 and the contact face 15. As shown in the figure, the mid section 7 and the end section 4 are straight, i.e. that they do not curve. The invention is more general though and is not limited to straight ramps and can advantageously also be used for curved ramps, as it is known from the prior art.

Furthermore, the side section 13' can have a width in the area at the fold 9 so that an angle 16 is formed which can function as a contact angle, when the ramp 1 rests on the platform 5.

The material for a ramp according to the invention is preferably aluminium, steel or stainless steel. The surface can be treated, if that is an advantage.

## Claims

1. A ramp (1) for use in driving up or down the ramp for transporting a vehicle from a first level to a second level (5), wherein the ramp (1) comprises a mid section (7) with a surface (12) and an end section (4) provided in extension of the surface (12) and with a contact face (15) for resting on the higher level when the ramp (1) is in use, where at each side of the ramp there is provided a reinforcing side section (13, 13') which extends at an angle upwards or downwards from the surface (12) of the mid section (7) and which extends upwards from the surface of the end section, **characterized in, that** in each side of the ramp (1) said reinforcing side section is provided which connects the mid section and the end section and which extends downwards from the surface of the end section (4) and that the reinforcing side section (13') has a width which decreases in two steps from the mid section (7) towards the end of the end section (4) to form a contact angle (16).

2. A ramp according to claim 1, wherein the angle is a right angle or an approximately right angle.

3. A ramp according to any one of the preceding claims wherein the side section (13') has a lower edge as a contact face (15) for resting on the higher level (5).

4. A ramp according to any one of the preceding claims wherein the reinforcing side section (13') has a width which decreases from the mid section (7) in a direction towards the end of the end section (4).

5. A ramp according to any one of the preceding claims wherein the end section (4) is provided in the extension of the surface (12) of the mid section (7) as a bent part in an angle with respect to the mid section (7).

6. A ramp according to claim 5, wherein the mid section (7) and the end section (4) are straight and wherein the angle (A) between the end section (4) and the mid section (7) is larger than the angle (B) between the end section (4) and the lower contact face (15).

7. A ramp according to any one of the preceding claims, wherein the contact angle (16) is positioned substantially below a bending (9) between the mid section (7) and the end section (4).

8. A ramp according to any one of the preceding claims wherein the mid section is reinforced in each side with other, L-formed side sections (13), and wherein the side section (13') extends itself in extension of one of these other side sections (13) towards the end of the end section (4).

9. A ramp according to any one of the preceding claims wherein the side section (13') is provided as a substantially right-angled bent part of the surface (12) and as a substantially right-angled bent part of the end section (4).

10. Use of a ramp according to any one of the preceding claims for transport of vehicles from a first level to a second level.

## Patentansprüche

1. Rampe (1) zum Hoch- und Runterfahren zum Befördern eines Fahrzeuges von einer ersten Ebene nach einer zweiten Ebene (5), wobei die Rampe (1) ein Mittelstück (7) mit einer Oberfläche (12) und ein Endstück (4) im Anschluß an die Oberfläche (12) aufweist, sowie eine Kontaktfläche (15) zum Stützen auf der höheren Ebene, wenn die Rampe (1) in Betrieb ist, wobei auf beiden Seiten der Rampe ein Versteifungs-Seitenstück (13, 13') angeordnet ist, das unter einen Winkel nach oben oder nach unten von der Oberfläche (12) des Mittelstücks (7) verläuft, und das nach oben von der Oberfläche des Endstücks verläuft, **dadurch gekennzeichnet, daß** das genannte, das Mittelstück und das Endstück verbindende Versteifungs-Seitenstück in beider Seiten der Rampe (1) angeordnet ist und sich nach unten von der Oberfläche des Endstücks (4) erstreckt, und daß das Versteifungs-Seitenstück (13') eine Breite aufweist, die zur Bildung eines Kontaktwinkels (16) sich in zwei Schritten vom Mittelstück (7) auf dem Ende des Endstücks (4) zu verjüngt.

2. Rampe nach Anspruch 1, wobei der Winkel ein rechter Winkel oder ein ungefähr rechter Winkel ist.

3. Rampe nach irgendeinem der vorhergehenden Ansprüche, wobei das Seitenstück (13') eine untere Kante als Kontaktfläche (15) zum Stützen auf der höheren Ebene (5) aufweist.

4. Rampe nach irgendeinem der vorhergehenden Ansprüche, wobei das Versteifungs-Seitenstück (13') eine Breite aufweist, die sich vom Mittelstück (7) Richtung Ende des Endstücks (4) verjüngt.

5. Rampe nach irgendeinem der vorhergehenden Ansprüche, wobei das Endstück (4) im Anschluß an die Oberfläche (12) des Mittelstücks (7) als ein gebogener Teil unter einem Winkel mit dem Mittelstück (7) angeordnet ist.

6. Rampe nach Anspruch 5, wobei das Mittelstück (7) und das Endstück (4) gerade sind, sind, und wobei der Winkel (A) zwischen dem Endstück (4) und dem Mittelstück (7) größer ist als der Winkel (B) zwischen dem Endstück (4) und der unteren Kontaktfläche (15).

7. Rampe nach irgendeinem der vorhergehenden Ansprüche, wobei der Kontaktwinkel (16) im wesentlichen unterhalb der Biegung (9) zwischen dem Mittelstück (7) und dem Endstück (4) gelegen ist.

8. Rampe nach irgendeinem der vorhergehenden Ansprüche, wobei das Mittelstück in beider Seiten durch andere, L-förmigen Seitenstücke (13) versteift ist, und wobei das Seitenstück (13') im Anschluß an eines von diesen anderen Seitenstücken (13) auf dem Ende des Endstücks (4) zu verläuft.

9. Rampe nach irgendeinem der vorhergehenden Ansprüche, wobei das Seitenstück (13') als ein im wesentlichen rechtwinklig gebogener Teil der Oberfläche (12) und als ein im wesentlichen rechtwinklig gebogener Teil des Endstücks (4) vorgesehen ist.

10. Verwendung einer Rampe nach irgendeinem der vorhergehenden Ansprüche zum Befördern von Fahrzeugen von einer ersten Ebene nach einer zweiten Ebene.

## Revendications

1. Rampe (1) à l'usage de faire monter ou descendre la rampe pour transporter un véhicule d'un premier niveau à un deuxième niveau (5), la rampe (1) comprenant une partie centrale (7) avec une surface (12) et une extrémité (4) prévue dans l'allongement de la surface (12) et avec une surface d'appui (15) pour s'appuyer sur le niveau supérieur lorsque la rampe (1) est en service, où sur chaque côté de la rampe une section latérale de renfort (13, 13') est prévue qui s'étend dans un angle vers le haut ou vers le bas de la surface (12) de la partie centrale (7) et qui s'étend vers le haut de la surface de l'extrémité, **caractérisée en ce que** sur chaque côté de la rampe (1) ladite section latérale de renfort est prévue qui raccorde la section centrale et l'extrémité et qui s'étend vers le bas de la surface de l'extrémité (4) et que la section latérale de renfort (13') comporte une largeur qui diminue en deux phases de la partie centrale (7) vers la partie extrême de l'extrémité (4) pour former un angle de support (16).

2. Rampe selon la revendication 1, où l'angle constitue un angle droit ou un angle sensiblement droit.

3. Rampe selon l'une quelconque des revendications précédentes, où la section latérale (13') comporte une arête inférieure comme une surface d'appui (15) pour s'appuyer sur le niveau supérieur (5).

4. Rampe selon l'une quelconque des revendications précédentes, où la section latérale de renfort (13') constitue une largeur qui diminue de la partie centrale (7) dans une direction vers la partie extrême de l'extrémité (4).

5. Rampe selon l'une quelconque des revendications précédentes, où l'extrémité (4) est prévue dans l'allongement de la surface (12) de la partie centrale (7) comme une partie courbée dans un angle à l'égard de la partie centrale (7).

6. Rampe selon la revendication 5, où la partie centrale (7) et l'extrémité (4) sont droites et que l'angle (A) entre l'extrémité (4) et la partie centrale (7) est plus grande que l'angle (B) entre l'extrémité (4) et la surface d'appui (15).

7. Rampe selon l'une quelconque des revendications précédentes, où l'angle d'appui (16) est positionné sensiblement au-dessous d'une flexion (9) entre la partie centrale (7) et l'extrémité (4).

8. Rampe selon l'une quelconque des revendications précédentes, où la partie centrale est renforcée sur chaque côté avec d'autres sections latérales en forme de L (13) et que la section latérale (13') s'étend elle-même dans l'allongement d'une de ces autres sections latérales (13) vers la partie extrême de l'extrémité (4).

9. Rampe selon l'une quelconque des revendications précédentes, où la partie latérale (13') est prévue comme une partie courbée sensiblement à angles droits de la surface (12) et comme une partie courbée sensiblement à angles droits de l'extrémité (4).

10. Usage d'une rampe selon l'une quelconque des revendications précédentes pour le transport de véhicules d'en premier niveau à un deuxième niveau.
